# EUROPÄISCHE PATENTANMELDUNG

(11) **EP 4 699 998 A1**
(43) Veröffentlichungstag der Anmeldung: **25.02.2026**
(21) Anmeldenummer: 25195762.7
(22) Anmeldetag: 13.08.2025
(51) Int. Cl.: C04B 28/02, C04B 20/02

(54) **MAUERWERK UMFASSEND EINE MEHRZAHL AN STEINEN EINER EINZIGEN DEFINIERTEN STEINART UND EINEN ZWISCHEN DIESEN STEINEN POSITIONIERTEN MÖRTEL**

(30) Priorität: 20.08.2024 DE 102024123767
(71) Anmelder: Sievert Baustoffe SE & Co. KG, 49090 Osnabrück (DE)
(72) Erfinder: Fooken, Michael, 49076 Osnabrück (DE); Zilg, Carsten, 79295 Sulzburg (DE)
(74) Vertreter: Deters, Frank

(57) **Zusammenfassung**

Die Erfindung betrifft ein Mauerwerk umfassend eine Mehrzahl an Steinen einer einzigen definierten Steinart und einen zwischen diesen Steinen positionierten Mörtel, wobei die Steinart ausgewählt ist aus Ziegelstein, Kalksandstein oder Betonstein und wobei der Mörtel aus Bindemittel in einem Anteil von 5 - 20 Gew.-%, optional Additiven bis zu 5 Gew.-% und aus Zuschlagstoffen mit einem Korndurchmesser von bis zu 4 mm bis zum Erreichen der 100 Gew.-%des Mörtels besteht. Der weist Mörtel jeweils eine gezielt auf die definierte Steinart abgestimmte Zusammensetzung auf, bei der die Zuschlagstoffe zu mehr als 20 Gew.-% bezogen auf das Gesamtgewicht der Zuschlagstoffe aus der definierten Steinart in zerkleinerter Form bestehen, die Zusammensetzung frei von Zuschlagstoffen aus einer der anderen definierten Steinarten sowie frei von Bimssteinpartikeln ist, und die Zusammensetzung weniger als 0,1 Gew.-% Gips, weniger als 0,1 Gew.-% Kunststoff, weniger als 0,5 Gew.-% Holz und weniger als 0,1 Gew.-% Partikel mit einem Eisen- oder Eisenoxidanteil von mehr als 70 Gew.-% aufweist.

## Beschreibung

Die Erfindung betrifft ein Mauerwerk umfassend eine Mehrzahl an Steinen einer einzigen definierten Steinart und einen zwischen diesen Steinen positionierten Mörtel. Die Steinart ist ausgewählt aus Ziegelstein, Kalksandstein oder Betonstein. Der Mörtel besteht aus Bindemittel in einem Anteil von 5 bis 20 Gew.-%, optional Additiven bis zu 5 Gew.-% und aus Zuschlagsstoffen mit einem Korndurchmesser von bis zu 4 mm bis zum Erreichen der 100 Gew.-% des Mörtels.

Derartige Mauerwerke sind in der Praxis als Ziegelsteinmauer, Kalksandsteinmauer oder Betonsteinmauer weit verbreitet. In dem Mauerwerk stecken wertvolle Ressourcen. Bei einem Abriss des Mauerwerks wird daher versucht, das abgerissene Mauerwerk ganz oder in Teilen wiederzuverwenden. So wird das Mauerwerk beispielsweise zerkleinert und als Untergrund im Straßenbau verwendet. Es gibt aber auch Verfahren, mit denen die Steine von dem anhaftenden Mörtel und einem neuen Mauerwerk verwendet werden. Hierzu werden die Steine beispielsweise mechanisch durch Abklopfen von dem Mörtel befreit. In einem neueren Verfahren werden die Steine mittels elektrodynamischer Fragmentierung von anhaftendem Mörtel befreit. Nachteilig an den beiden vorgenannten Verfahren ist jeweils, dass diese sehr aufwendig und kostenintensiv sind. An der Wiederverwendung im Unterbau einer Straße nachteilig ist, dass das Recyclat einer hierarchisch niederwertigeren Verwendung zugeführt wird. Dies gilt auch für das in DE 19717763 beschriebene Verfahren zur Herstellung von Verfüllmassen aus zerkleinertem Beton, Mauerwerk, Mörteln, Dachziegeln oder Gemischen.

Der Erfindung liegt die Aufgabe zugrunde, ein Mauerwerk zu schaffen, das mit weniger Aufwand und kostengünstiger sowie ressourcensparend wiederverwendet werden kann und ressourcenschonend hergestellt wird.

Die Erfindung löst diese Aufgabe durch ein Mauerwerk der eingangs genannten Art mit den Merkmalen des kennzeichnenden Teils des Patentanspruchs 1. Weitere Einzelheiten und Vorteile sind den Unteransprüchen 2 bis 6 zu entnehmen.

Erfindungsgemäß weist der Mörtel jeweils eine gezielt auf die definierte Steinart der Mauer abgestimmte Zusammensetzung auf. In dieser Zusammensetzung bestehen die Zuschlagstoffe zu mehr als 20 Gew.-% bezogen auf das Gesamtgewicht der Zuschlagstoffe aus der definierten Steinart in zerkleinerter Form. Die Zusammensetzung des Mörtels ist zudem frei von Zuschlagstoffen aus einer der anderen definierten Steinarten sowie zusätzlich frei von Bimssteinpartikeln. Zudem weist die Zusammensetzung des Mörtels weniger als 0,1 Gew.-% Gips, weniger als 0,1 Gew.-% Kunststoff, weniger als 0,5 Gew.-% Holz und weniger als 0,1 Gew.-% Partikel mit einem Eisen- oder Eisenoxidanteil von mehr als 70 Gew.-% auf. Durch diese Ausgestaltung wird erreicht, dass das gesamte Mauerwerk später einmal abgerissen und ohne Trennung der Steine vom Mörtel zerkleinert werden kann, wobei das dergestalt zerkleinerte Material dann zur Herstellung neuer Steine der definierten Steinart oder auch des auf diese Steinart abgestimmten Mörtels mit auf die Steinart abgestimmter Zusammensetzung als Zuschlagstoff wiederverwendet werden kann, welches dann erneut als Recyclat in einem Mauerwerk nach Anspruch 1 dienen kann. Das Rezyklat des vollständigen Mauerwerks nach dem Patentanspruch 1 kann also ohne Trennung in Steine und Mörtel in dessen ursprünglichen Zweck eingesetzt werden und muss nicht lediglich einer abfallhierachisch niederwertigen Verwendung zugeführt werden. Aufwendige Trennverfahren wie das Abklopfen der Stein von dem Mörtel oder eine elektrodynamische Fraktionierung sind hierzu nicht erforderlich. Es wurde herausgefunden, dass gerade die Freiheit von den vorgenannten Stoffen jeweils bezogen auf die in dem Mauerwerk verwendete Steinart und die Unterschreitung der genannten Grenzwerte zu Gips, Kunststoff, Holz und Eisen- sowie Eisenoxidpartikel dazu führt, dass das Mauerwerk insgesamt sortenrein bleibt und das gesamte Mauerwerk ohne Trennung in Steine und Mörtel erneut in einem Mauerwerk der gleichen definierten Steinart sowohl in den Steinen als auch in dem Mörtel wiederverwendet werden kann. Aufgrund der nicht erforderlichen Abtrennung des Mörtels von den Steinen ist das Verfahren zur Nutzung des erfindungsgemäßen Mauerwerks als Rezyklat mit wenig Aufwand sowie kostengünstig und ressourcensparend umzusetzen.

Unter einem Ziegelstein wird im Sinne der Erfindung ein Mauerstein verstanden, der aus Ton oder anderen tonhaltigen Stoffen mit oder ohne Sand, Brennstoffen oder anderen Zusätzen hergestellt ist und bei einer ausreichend hohen Temperatur gebrannt wird, um einen keramischen Verbund zu erzielen.

Unter einem Kalksandstein wird im Sinne der Erfindung ein Mauerstein verstanden, der vorwiegend aus Kalk und kieselsäurehaltigen Stoffen besteht und durch Dampfdruck erhärtet wurde.

Ein Betonstein im Sinne der Erfindung ist ein Mauerstein aus Zement, Zuschlagstoffen und Wasser, wobei der Zement abgebunden ist.

In einer vorteilhaften Ausgestaltung der Erfindung bestehen die Zuschlagstoffe zu mehr als 30 Gew.-% aus dem Mauerwerk nach Anspruch 1 in zerkleinerter Form. Das Mauerwerk enthält in dieser Ausgestaltung somit bereits das Rezyklat aus einem zuvor hergestellten Mauerwerk nach Anspruch 1. Gleichzeitig realisiert dieses Mauerwerk ebenfalls sämtliche Merkmale des Patentanspruchs 1. Das Mauerwerk ist somit bereits selbst ressourcenschonender hergestellt worden und dient gleichzeitig zukünftigen erfindungsgemäßen Mauerwerken in zerkleinerter Form (Rezyklat) erneut als Zuschlagstoff.

In einer vorteilhaften Ausgestaltung der Erfindung enthält der Mörtel Zuschlagstoffe in einem Anteil von 80 bis 95 Gew.-%, insbesondere von 80 bis 90 Gew.-%.

In einer bevorzugten Ausgestaltung der Erfindung bestehen die Zuschlagstoffe in dem Mörtel zu mehr als 30 Gew.-%, insbesondere zu mehr als 40 Gew.-%, bezogen auf das Gesamtgewicht der Zuschlagstoffe aus der definierten Steinart in zerkleinerter Form. Die definierte Steinart ist dabei in den Zuschlagstoffen in Form von Partikeln ohne anhaftenden Mörtel enthalten oder aber mit anhaftendem Mörtel, wobei es sich dann um Partikel aus dem erfindungsgemäßen Mauerwerk nach Anspruch 1 handeln kann oder auch um Partikel aus einem nichterfindungsgemäßen Mauerwerk. Letzterenfalls müssen aber zwingend die in dem kennzeichnenden Teil des Anspruchs 1 aufgeführten Grenzwerte für Gips, Kunststoff, Holz sowie Eisen- oder Eisenoxidanteile in der Zusammensetzung des in dem Mauerwerk verarbeiteten Mörtels eingehalten werden.

In einer vorteilhaften Ausgestaltung der Erfindung bestehen die Zuschlagstoffe in dem Mörtel zu mehr als 40 Gew.-%, insbesondere zu mehr als 60 Gew.-% aus dem Mauerwerk in zerkleinerter Form. In einer besonders bevorzugten Ausgestaltung besehen die Zuschlagstoffe vollständig aus dem Mauerwerk in zerkleinerter Form. Je höher der Anteil der Zuschlagstoffe in dem Mörtel aus dem Mauerwerk in zerkleinerter Form ist, desto ressourcenschonender ist dieses Mauerwerk hergestellt.

Nachfolgend wird eine herkömmliche Mörtelzusammensetzung mit drei Mörtelzusammensetzung jeweils abgestimmt auf definierte Steinarten verglichen.

In vier Versuchen wird jeweils eine Basiswerktrockenmörtelmischung aus 10 Gewichtsprozent CEM II B-M- (S-LL) 42,5 R, 8,95 Gewichtsprozent Kalksteinmehl 0,0035 Gewichtsprozent Dispersionspulver und 0,0105 Gewichtsprozent Methylcellulose hergestellt.

Im ersten Versuch werden zur Basiswerktrockenmörtelmischung 81,036 Gewichtsprozent eines Zuschlagstoffes in Form von Quarzsand mit der Korngröße 0-4 mm hinzugemischt. Von der Mischung werden 2000 g eingewogen und unter Rühren gemäß EN 196 durch Zugabe von 290 g Wasser innerhalb von 250 Sekunden Frischmörtel hergestellt. Die Temperatur des Frischmörtels liegt bei 18°C. Das Ausbreitmaß wird bestimmt und beträgt bei 148 mm. Die Nassrohdichte liegt bei 1800 kg/m³. Im direkten Anschluss an die Bestimmung der Frischmörtelrohdichte wird das Oberteil des Prüfgerätes auf den gesäuberten Schliffrand des Behälters gesetzt und das Gerät verschlossen. Das noch freie Volumen wird mit Wasser aufgefüllt. Die Kammer wird auf vorgeschriebenen Druck gebracht. Nach erfolgtem Druckausgleich wird der Luftgehalt ermittelt. Der Luftporengehalt beträgt 10 %. Aus der Frischmörtelmischung werden Prüfkörper der Dimension 4x4x160 mm nach DIN EN 1015 Teil 11 hergestellt und zur Aushärtung 28 Tage bei Normklima gelagert. Die mechanischen Eigenschaften daraus hergestellter Prüfkörper werden nach DIN EN 1015 Teil 11 ermittelt. Die Biegezugfestigkeiten liegt bei 1 N/mm², die Druckfestigkeit beträgt 5 N/mm².

Im zweiten Versuch werden zur Basiswerktrockenmörtelmischung 41,036 Gewichtsprozent eines Zuschlagstoffes in Form von Quarzsand der Korngröße 0-4 mm hinzugemischt sowie weitere 40 Gewichtsprozent eines erfindungsgemäßen Zuschlagstoffes, der aus Ziegelmauerwerkrecyclat besteht hinzugemischt. Von der Mischung werden 2000 g eingewogen und unter Rühren gemäß EN 196 durch Zugabe von 290 g Wasser innerhalb von 250 Sekunden Frischmörtel hergestellt. Die Temperatur des Frischmörtels liegt bei 19°C. Das Ausbreitmaß wird bestimmt und beträgt bei 152 mm. Die Nassrohdichte liegt bei 1780 kg/m³. Im direkten Anschluss an die Bestimmung der Frischmörtelrohdichte wird das Oberteil des Prüfgerätes auf den gesäuberten Schliffrand des Behälters gesetzt und das Gerät verschlossen. Das noch freie Volumen wird mit Wasser aufgefüllt. Die Kammer wird auf vorgeschriebenen Druck gebracht. Nach erfolgtem Druckausgleich wird der Luftgehalt ermittelt. Der Luftporengehalt beträgt 11 %. Aus der Frischmörtelmischung werden Prüfkörper der Dimension 4x4x160 mm nach DIN EN 1015 Teil 11 hergestellt und zur Aushärtung 28 Tage bei Normklima gelagert. Die mechanischen Eigenschaften daraus hergestellter Prüfkörper werden nach DIN EN 1015 Teil 11 ermittelt. Die Biegezugfestigkeiten liegt bei 1,1 N/mm², die Druckfestigkeit beträgt 7 N/mm².

Im dritten Versuch werden zur Basiswerktrockenmörtelmischung 41,036 Gewichtsprozent eines Zuschlagstoffes in Form von Quarzsand der Korngröße 0-4 mm hinzugemischt sowie weiter 40 Gewichtsprozent eines erfindungsgemäßen Zuschlagstoffes der aus Kalksandsteinmauerwerkrecyclat besteht hinzugemischt. Von der Mischung werden 2000 g eingewogen und unter Rühren gemäß EN 196 durch Zugabe von 290 g Wasser innerhalb von 250 Sekunden Frischmörtel hergestellt. Die Temperatur des Frischmörtels liegt bei 18°C. Das Ausbreitmaß wird bestimmt und beträgt bei 155 mm. Die Nassrohdichte liegt bei 1810 kg/m³. Im direkten Anschluss an die Bestimmung der Frischmörtelrohdichte wird das Oberteil des Prüfgerätes auf den gesäuberten Schliffrand des Behälters gesetzt und das Gerät verschlossen. Das noch freie Volumen wird mit Wasser aufgefüllt. Die Kammer wird auf vorgeschriebenen Druck gebracht. Nach erfolgtem Druckausgleich wird der Luftgehalt ermittelt. Der Luftporengehalt beträgt 12 %. Aus der Frischmörtelmischung werden Prüfkörper der Dimension 4x4x160 mm nach DIN EN 1015 Teil 11 hergestellt und zur Aushärtung 28 Tage bei Normklima gelagert. Die mechanischen Eigenschaften daraus hergestellter Prüfkörper werden nach DIN EN 1015 Teil 11 ermittelt. Die Biegezugfestigkeiten liegt bei 1,5 N/mm², die Druckfestigkeit beträgt 6 N/mm².

Im vierten Versuch werden zur Basiswerktrockenmörtelmischung 41,036 Gewichtsprozent eines Zuschlagstoffes in Form von Quarzsand der Korngröße 0-4 mm hinzugemischt sowie weiter 40 Gewichtsprozent eines erfindungsgemäßen Zuschlagstoffes der aus Betonrecyclat besteht hinzugemischt. Von der Mischung werden 2000 g eingewogen und unter Rühren gemäß EN 196 durch Zugabe von 290 g Wasser innerhalb von 250 Sekunden hergestellt. Die Temperatur des Frischmörtels liegt bei 21°C. Das Ausbreitmaß wird bestimmt und beträgt bei 148 mm. Die Nassrohdichte liegt bei 1840 kg/m³. Im direkten Anschluss an die Bestimmung der Frischmörtelrohdichte wird das Oberteil des Prüfgerätes auf den gesäuberten Schliffrand des Behälters gesetzt und das Gerät verschlossen. Das noch freie Volumen wird mit Wasser aufgefüllt. Die Kammer wird auf vorgeschriebenen Druck gebracht. Nach erfolgtem Druckausgleich wird der Luftgehalt ermittelt. Der der Luftporengehalt beträgt 10 %. Aus der Frischmörtelmischung werden Prüfkörper der Dimension 4x4x160 mm nach DIN EN 1015 Teil 11 hergestellt und zur Aushärtung 28 Tage bei Normklima gelagert. Die mechanischen Eigenschaften daraus hergestellter Prüfkörper werden nach DIN EN 1015 Teil 11 ermittelt. Die Biegezugfestigkeiten liegt bei 1 N/mm², die Druckfestigkeit beträgt 5 N/mm².

Die Versuche zwei bis vier zeigen, dass die erfindungsgemäßen Rezepturen Frischmörteleigenschaften haben, die mit den Eigenschaften eines herkömmlichen Frischmörtels gemäß der Rezeptur aus dem Versuch 1 vergleichbar sind. Die daraus hergestellten Prüfkörper besitzen vergleichbare Druckfestigkeiten und Biegezugfestigkeiten wie Mauermörtel, die mit Primärgesteinskörnung (Quarzsand) als Zuschlagstoff hergestellt werden.

## Patentansprüche

1. Mauerwerk umfassend eine Mehrzahl an Steinen einer einzigen definierten Steinart und einen zwischen diesen Steinen positionierten Mörtel,
wobei die Steinart ausgewählt ist aus Ziegelstein, Kalksandstein oder Betonstein und wobei der Mörtel aus Bindemittel in einem Anteil von 5 - 20 Gew.-%, optional Additiven bis zu 5 Gew.-% und aus Zuschlagstoffen mit einem Korndurchmesser von bis zu 4 mm bis zum Erreichen der 100 Gew.-%des Mörtels besteht, **dadurch gekennzeichnet, dass** der Mörtel jeweils eine gezielt auf die definierte Steinart abgestimmte Zusammensetzung aufweist, bei der die Zuschlagstoffe zu mehr als 20 Gew.-% bezogen auf das Gesamtgewicht der Zuschlagstoffe aus der definierten Steinart in zerkleinerter Form bestehen, die Zusammensetzung frei von Zuschlagstoffen aus einer der anderen definierten Steinarten sowie frei von Bimssteinpartikeln ist, und die Zusammensetzung weniger als 0,1 Gew.-% Gips, weniger als 0,1 Gew.-% Kunststoff, weniger als 0,5 Gew.-% Holz und weniger als 0,1 Gew.-% Partikel mit einem Eisen- oder Eisenoxidanteil von mehr als 70 Gew.-% aufweist.

2. Mauerwerk nach Anspruch 1, **dadurch gekennzeichnet, dass** die Zuschlagstoffe zu mehr als 30 Gew.-% aus dem Mauerwerk nach Anspruch 1 in zerkleinerter Form bestehen.

3. Mauerwerk nach einem der vorhergehenden Ansprüche, **dadurch gekennzeichnet, dass** der Mörtel Zuschlagstoffe in einem Anteil von 80 bis 95 Gew.-%, insbesondere von 80 bis 90 Gew.-% enthält.

4. Mauerwerk nach einem der vorhergehenden Ansprüche, **dadurch gekennzeichnet, dass** die Zuschlagstoffe in dem Mörtel zu mehr als 30 Gew.-%, insbesondere zu mehr als 40 Gew.-%, bezogen auf das Gesamtgewicht der Zuschlagstoffe aus der definierten Steinart in zerkleinerter Form bestehen.

5. Mauerwerk nach einem der vorhergehenden Ansprüche, **dadurch gekennzeichnet, dass** die Zuschlagstoffe in dem Mörtel zu mehr als 40 Gew.-%, insbesondere zu mehr als 60 Gew.-% aus dem Mauerwerk in zerkleinerter Form bestehen.

6. Mauerwerk nach einem der vorhergehenden Ansprüche, **dadurch gekennzeichnet, dass** die Zuschlagstoffe vollständig aus dem Mauerwerk in zerkleinerter Form bestehen.
